# EUROPÄISCHE PATENTSCHRIFT

(11) **EP 2 925 502 B1**
(45) Veröffentlichungstag und Bekanntmachung des Hinweises auf die Patenterteilung: **04.01.2017**
(21) Anmeldenummer: 13773261.6
(22) Anmeldetag: 07.10.2013
(51) Int. Cl.: B29C 45/27

(54) **SPRITZGUSSWERKZEUG MIT HEISSKANALVERTEILER**
INJECTION MOULD WITH HOT RUNNER MANIFOLD
MOULE D'INJECTION AVED UN DISTRIBUTEUR À CANAUX CHAUDS

(30) Priorität: 03.12.2012 CH 26682012; 19.12.2012 CH 28562012
(43) Veröffentlichungstag der Anmeldung: 07.10.2015
(73) Patentinhaber: Fostag Formenbau AG, 8260 Stein am Rhein (CH)
(72) Erfinder: MÜHLEMANN, Rolf, CH-8255 Schlattingen (CH)
(74) Vertreter: Schneider Feldmann AG Patent- und Markenanwälte
(86) Internationale Anmeldenummer: PCT/EP2013/070809
(87) Internationale Veröffentlichungsnummer: WO 2014/086516

(56) Entgegenhaltungen:
- EP-A2- 0 523 549
- JP-A- H0 631 780
- JP-A- S59 135 134
- US-A1- 2004 166 195

## Beschreibung

Die vorliegende Erfindung betrifft ein Spritzgusswerkzeug mit mindestens einer zentralen Zufuhrleitung bestehend aus übereinander angeordneten Platten, mindestens einer Heisskanalzuleitung mit einem Verzweigungspunkt oder mehreren Verzweigungspunkten in denen eine Richtungsänderung und / oder eine Teilung der Heisskanalzuleitung erfolgt, zur Zuführung der heissen Spritzgussmasse zu zwei oder mehreren Kavitäten.

Spritzgusswerkzeuge sind Werkzeuge mittels denen Kunststoffteile gefertigt werden. Sie werden in Spritzgussmaschinen eingesetzt in denen eine Spritzgussmasse erhitzt und im geschmolzenen Zustand über sogenannte Heisskanalzuleitungen zu den Kavitäten geführt wird in denen die entsprechenden Kunststoffteile geformt werden. Im Bereich der Kavitäten verlaufen in diesen Spritzgusswerkzeuge Kühlkanäle die den Bereich um die Kavitäten abkühlen, damit der flüssige Kunststoff erstarrt.

Spritzgusswerkzeuge müssen regelmässig gewartet werden, da eine gewisse Erosion auftritt, die jedoch relativ gering ist. Viel problematischer sind Ablagerungen, die in den Heisskanalzuleitungen auftreten. Diese Ablagerungen treten je nach Kunststoff mehr oder weniger häufig auf. Ablagerungen treten aber ganz generell bei allen Kunststoffen auf unabhängig ob es sich dabei um Thermoplaste oder Duroplaste handelt. Generell lässt sich jedoch sagen, dass je höher die Verarbeitungstemperatur um so mehr treten Ablagerungen auf. Örtlich kommen selbstverständlich sämtliche Bereiche der Spritzgussform in Frage, die mit der heissen Spritzgussmasse in Berührung kommen. Bekannt ist jedoch, dass Ablagerungen in der Spritzgusskavität eher mit mangelnder Entlüftung der Spritzgussform zu tun hat und eher auf einen Konstruktionsfehler hinweist, während Ablagerungen in den Heisskanalzuleitungen bei gewissen Kunststoffen unvermeidlich auftreten auch wenn keine Überhitzung vorliegt.

Folglich kann man davon ausgehen, dass bei korrekter Konstruktion und Temperaturführung das Hauptproblem der Ablagerungen in den Heisskanalzuleitungen auftritt. Die Reinigung dieser Heisskanalzuleitungen ist jedoch äusserst aufwendig. Der Verlauf der Heisskanalzuleitungen in den Spritzgussformen ist keineswegs einfach geradlinig sondern verläuft innerhalb der Spritzgussform von einem Richtungsänderungspunkt zum nächsten zwar geradlinig oder auch von einem Verzweigungspunkt zum nächsten Verzweigungspunkt bzw. von einem Richtungsänderungspunkt zu einem Verzweigungspunkt geradlinig.

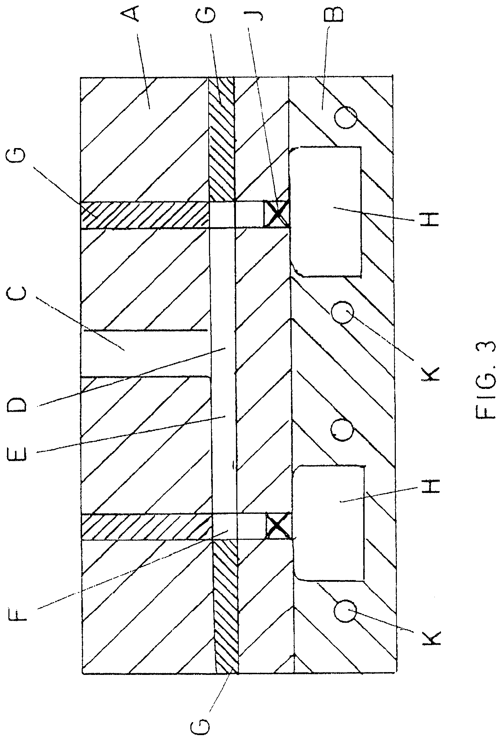

In der Fig. 3 ist in der vereinfachten Darstellung ein Spritzgusswerkzeug des Standes der Technik gezeigt. Es besteht im vorliegendem Beispiel aus zwei Platten, nämlich aus einer oberen Grundplatte A und einer unteren Grundplatte B. In der oberen Platte A befinden sich einerseits die zentrale Heisskanalzuleitung C und von einem Verzweigungspunkt D führen verschiedene Heisskanalzuleitungen E in horizontale Richtung. Hier werden diese Heisskanalzuleitungen E durch eine durchgehende horizontale Bohrung realisiert und diese Bohrungen werden dann durch Stopfen G bis zum Richtungsänderungspunkt F verschlossen. Über einen weiteren Abschnitt der Heisskanalzuleitung F gelangt die heisse Spritzgussmasse über ein Injektionsventil J schliesslich in eine Kavität H.

Müssen die Heisskanalzuleitungen gereinigt werden, so müssen die Stopfen G ausgebohrt werden, die Leitungen gereinigt und danach neue Stopfen eingesetzt werden. Dieser Aufwand kann beim Spritzgussbetrieb selbst nicht durchgeführt werden und die entsprechende Spritzgussform muss an die Formenbaufirma zurückgesandt werden, wo dann diese Servicearbeiten durchgeführt werden. Hierdurch entsteht ein Produktionsunterbruch von zumindest mehreren Tagen meist jedoch von mehreren Wochen.

Zwar zeigen verschiedene Dokumente, wie beispielsweise die GB 1 299 094 oder DE 10 2008 045701-A oder auch die EP 2 263 845 B Spritzgusswerkzeuge mit Heisskanalzuleitungen, doch befassen sich diese Dokumente mit anderen Problemen, beispielsweise mit spezieller Zuführung dieser Heisskanalzuleitungen um damit den Aufbau von Ablagerungen zu reduzieren.

Aus der JP S59 135 134 ist ein Spritzgusswerkzeug bekannt, mit auswechselbaren Einsätzen in den Verteilplatten. Die auswechselbaren Einsätze sind als Verteilersatz oder Umlenkeinsätze gestaltet und bestehen aus mehreren Teilen, die mittels Stifte zusammenfügbar sind. Die auswechselbaren Einsätze sind in Vertiefungen in der oberen und/oder in den unteren Oberflächen der Verteilplatten eingesetzt oder durchsetzen die Verteilplatte vollständig. Alle Heisskanalzuleitungen verlaufen geradlinig horizontal in den Verteilplatten und die auswechselbaren Einsätze bilden teilweise gleichzeitig Endstopfen der Heisskanalzuleitungen.

Eine gleichartige Lösung zeigt das Dokument EP 0 523 549 A. Hier queren auswechselbare Verteil- oder Umlenkeinsätze die Verteilplatte immer. Die Heisskanalzuleitungen verlaufen in den Verteilplatten geradlinig horizontal, also parallel zur oberen und unteren Begrenzungsfläche der Verteilplatte.

In vereinfachter Weise ist die Lösung gemäss der US 2004/0166195 gestaltet. Hier sind zwei Verteilplatten übereinander angeordnet. Nur die zentrale Zufuhrleitung ist als auswechselbare Buchse gestaltet. Die Heisskanalzuleitungen verlaufen in beiden Verteilplatten horizontal.

Das Dokument JP H06 31780 A offenbart eine einzige Verteilplatte in der Heisskanalzuleitungen die Platte geneigt von der zentralen Zuführung zu den Injektionsdüsen in einer Kavitätenplatten führen. In der Verteilplatte sind keine auswechselbare Einsätze vorhanden.

Es ist folglich die Aufgabe der vorliegenden Erfindung ein Spritzgusswerkzeug gemäss Oberbegriff des Patentanspruches 1 zu schaffen, das so gestaltet ist, dass dessen Heisskanalzuleitungen wesentlich einfacher zu reinigen sind und folglich die Unterbruchszeiten für die Reinigung des Werkzeuges und die hiermit verbundenen Kosten reduziert wird.

Diese Aufgabe löst ein Spritzgusswerkzeug der eingangs genannten Art, das sich dadurch auszeichnet, dass in jeder Platte der Spritzgussform die Heisskanalzuleitungen geradlinig von der oberen Fläche bis zur unteren Fläche dieser Platte gerade und geneigt zur oberen beziehungsweise unteren Fläche verlaufen und mindestens einseitig in auswechselbaren Einsätzen münden in denen die Verteilung oder die Richtungsänderung einer Heisskanalzuleitung erfolgt.

In der Zeichnung ist ein bevorzugtes Ausführungsbeispiel des Erfindungsgegenstandes dargestellt und nachfolgend erläutert. Es zeigt:
- Fig. 1: ein Ausführungsbeispiel eines Spritzwerkzeuges welches gemäss der Erfindung gestaltet ist und in
- Fig. 2: ist dasselbe Spritzgusswerkzeug wie in Figur 1 nochmals identisch dargestellt zur Entlastung der Figur von zu vielen Bezugszeichen.
- Fig. 3: zeigt stark vereinfacht ein Spritzwerkzeug der herkömmlichen Bauart wie bereits in der Beschreibungseinleitung detailliert beschrieben.

Auf die nochmalige Beschreibung eines Spritzgusswerkzeuges gemäss dem Stand der Technik, wie in der Figur 3 vereinfacht dargestellt, wird verzichtet.

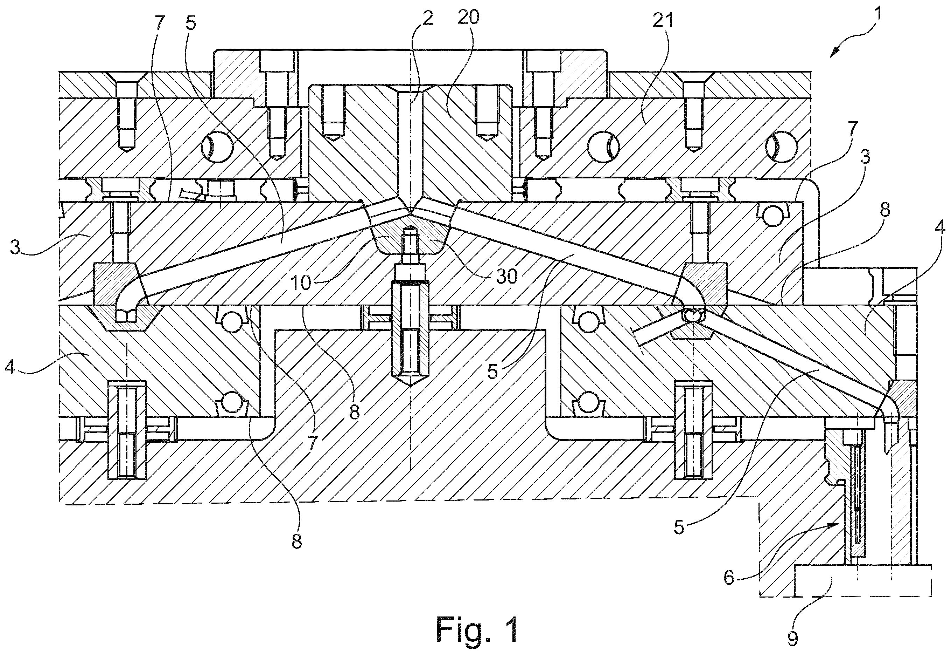

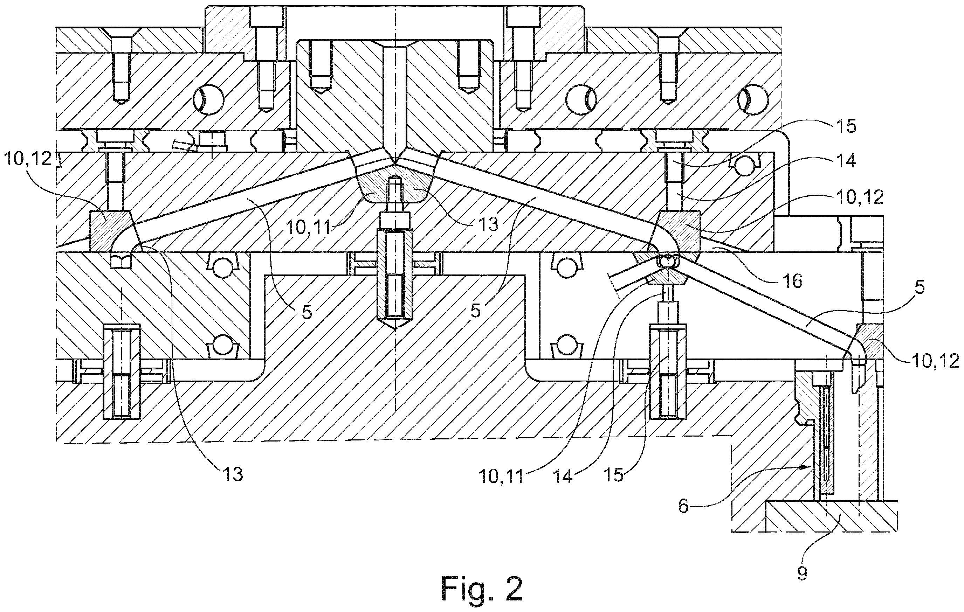

In den Figuren 1 und 2 ist ein Ausschnitt eines Spritzgusswerkzeuges gemäss der Erfindung dargestellt. Das Spritzgusswerkzeug ist insgesamt mit 1 bezeichnet. Zu oberst erkennt man eine zentrale Zuleitung 2, die in einem Ausgussbuchse 20 eingeformt ist. Diese Ausgussbuchse 20 ist in einer Fixierplatte 21 gehalten. Die Ausgussbuchse 20 mit der zentralen Zuleitung 2, die mit einem hier nicht dargestellten Extruder oder Spritzgussaggregat der Spritzgussmaschine in Verbindung steht, ruht auf einer oberen Platte 3. Diese wiederum liegt auf einer unteren Platte 4 auf. Mit hier nicht weiter zu erörternden Mitteln sind die einzelnen Platten lösbar miteinander verbunden.

In den einzelnen Platten sind Heizmittel angeordnet. Diese Heizmittel können elektrisch isolierte Heizstäbe oder auch Heizkanäle sein durch die ein Heizfluid gepumpt wird. Da diese Heizmittel herkömmlich sind und in ihrer Ausgestaltung von der Erfindung unabhängig sind, wird auf deren weiteren Erläuterung verzichtet.

Jede Verteilplatte 3, 4 eines Spritzgusswerkzeuges 1 besitzt eine obere Fläche 7 und eine untere Fläche 8. Je nach der Komplexität des Spritzgusswerkzeuges 1 erhöht sich die Anzahl der erforderlichen Verteilplatten 3, 4. Die Begriffe obere Verteilplatte 3 bzw. untere Verteilplatte 4 sind somit lediglich als Relationsangaben zweier benachbarten Verteilplatten zu sehen. Je nachdem bildet beispielsweise bei einem Spritzgusswerkzeug 1 mit drei entsprechenden Verteilplatten, die mittlere Verteilplatte, im Bezug auf die darunter liegende Verteilplatte die obere Verteilplatte bzw. im Bezug auf die darüber liegende Verteilplatte die unteren Verteilplatte.

Jede Verteilplatte hat aber eine obere Fläche 7 und eine untere Fläche 8.

Die zentrale Zuleitung 2 in Ausgussbuchse 20 mündet in einen auswechselbaren Einsatz 10 der oberen Verteilplatte 3. Hierzu ist in der oberen Fläche 7 dieser oberen Verteilplatte 3 eine Vertiefung 30 eingeformt. Im hier dargestellten Beispiel greift die Ausgussbuchse 20 teilweise in die Vertiefung 30 ein. Die Ausgussbuchse 20 bildet praktisch die Oberseite der unterhalb der zentralen Zuleitung 2 anschliessenden Heisskanalzuleitungen 5, die von hier abzweigen. Während somit hier die unteren Hälften der abzweigenden Heisskanalzuleitungen 5 vom entsprechenden auswechselbaren Einsatz 10 gebildet werden, sind hier die oberen Hälften der abzweigenden Heisskanalzuleitungen 5 durch den in die Vertiefung 30 eingreifenden Teile der Ausgussbuchse 20 gebildet.

Diese Ausgestaltung ist jedoch nicht zwingend und die Heisskanalzuleitungsansätze 5 können auch vollständig im auswechselbaren Einsatz 10 eingeformt sein.

Prinzipiell unterscheidet man zwei verschiedene Arten der Einsätze, nämlich einerseits Verteileinsätze, die mit 11 bezeichnet sind und andererseits Umlenkeinsätze, die lediglich dazu dienen eine Richtungsänderung der Heisskanalzuleitung 5 zu realisieren. Während wie erwähnt, die Verteileinsätze mit 11 bezeichnet sind, sind die Umlenkeinsätze mit 12 bezeichnet. In beiden Fällen handelt es sich jedoch immer um auswechselbare Einsätze 10.

Um die Auswechselbarkeit der auswechselbaren Einsätze 10, 11, 12 zu erleichtern, sind diese bevorzugtso gestaltet, dass diese in eine Schliessrichtung sich verjüngen. Im Normalfall sind diese auswechselbaren Einsätze in der Aufsicht mehreckig gestaltet und jene Fläche der auswechselbaren Einsätze 10, in die die Heisskanalzuleitung 5 mündet, ist mit 13 bezeichnet. Diese Mündung bzw. Austrittsflächen 13 sind bevorzugterweise so geneigt, dass diese senkrecht zur Verlaufsrichtung des dort mündenden bzw. austretenden Heisskanalzuleitung verlaufen.

Prinzipiell können die auswechselbaren Einsätze kubisch oder zylindrisch mit senkrechten Wänden oder kegelstumpf beziehungsweise pyramidenstumpfförmig mit geneigten Wänden sein.

Handelt es sich beim auswechselbaren Einsatz 10 um einen Verteileinsatz 11, so weißt dieser mindestens zwei Austrittsflächen 13 auf. Prinzipiell können die Verteileinsätze jedoch vieleckig sein und davon können problemlos nicht nur zwei Heisskanalzuleitungen abzweigen, sondern diese Heisskanalzuleitungen können sternförmig angeordnet sein, so dass eine Vielzahl von Heisskanalzuleitungen abzweigen können. Üblich sind zwei bis maximal acht solche abzweigenden Heisskanalzuleitungen vorhanden. Bei Spritzgusswerkzeugen, der hier interessierenden Art, die in der Fachsprache als sogenannte "hot-runner" bezeichnet werden, benennt man das Spritzgusswerkzeug nach der Anzahl der darin vorgesehenen Kavitäten 9. Die Kavitäten sind die mit der heissen Spritzgussmasse zu füllenden Hohlräume. Hat man beispielsweise ein Werkzeug mit sechzehn Kavitäten, so spricht man von einem 16fach-Werkzeug. In einem solchen Falle wird man meistens in der oberen Verteilplatte 3 vom Verteileinsatz 11 aus vier Heisskanalleitungen 5 anbringen, die dann zu Umlenkeinsätze 12 in der oberen Verteilplatte 3 an dessen Unterseite eingelassen sind. Diese Umlenkeinsätze 12 münden dann wiederum in Verteileinsätze 11 in der oberen Fläche der unteren Verteilplatte 4, wobei dann von jedem Verteileinsatz 11 wiederum vier Heisskanalzuleitungen 5 abzweigen, die dann beispielsweise über sechzehn Umlenkeinsätze 12 in sechzehn Kavitäten 9 münden. In der unteren Fläche der zu untersten Verteilplatte, die mit den Kavitäten 9 in Verbindung steht, sind dann nur noch Umlenkeinsätze 12 vorhanden.

Obwohl hier in der bevorzugten Ausführungsform die auswechselbaren Einsätze 10 mit den von der Verteilplattenoberseite zum Boden der Vertiefung 30 hin sich verjüngenden und damit geneigt zu der oberen bzw. unteren Fläche 7, 8 der jeweiligen oberen oder unteren Platte 3, 4 verlaufend dargestellt sind, ist es selbstverständlich auch möglich die Seitenflächen der auswechselbaren Einsätze senkrecht zu den oberen bzw. unteren Flächen der jeweiligen Platte verlaufend zu gestalten. Dies ist nicht zuletzt deshalb möglich, weil man bevorzugterweise jeweils von der Oberfläche, die der Vertiefung 30 gegenüberliegen, senkrecht zur Plattenoberfläche eine Bohrung 14 anbringt, die mit einem entsprechenden Innengewinde versehen ist, und in der Schrauben einsetzbar sind, mittels denen ein Druck auf die jeweiligen auswechselbaren Einsätze 10, 11, 12 ausüben kann. Hiermit lassen sich die Einsätze höchstgenau mit der jeweiligen Oberfläche bündig befestigen und insbesondere lassen sich die Einsätze zur Reinigung leicht ausstossen. Entsprechend sind diese Bohrungen als Ausstossbohrungen 14 bezeichnet. Die entsprechenden darin lagernden Ausstossschrauben 15 weisen ein entsprechendes, zur Gewindebohrung 14 passendes Aussengewinde auf. Diese Ausstoss-Schrauben dienen sowohl der Befestigung als auch der Demontage der auswechselbaren Einsätze 10, 11, 12.

Treten an den Heisskanalzuleitungen Ablagerungen auf, so führt dies dazu, dass diese Ablagerungen eine Isolierschicht bilden, und folglich die Wärme des Spritzgusswerkzeuges nicht mehr korrekt an die Spritzgussmasse weiterleiten kann. Folglich ist dann die Temperatur der Spritzgussmasse beim Eintritt in die Kavität zu tief, und dies erkennt der Kunststofftechniker an den fertigen Teilen. Kurzzeitig lässt sich dies kompensieren, indem man die Temperatur des Spritzgusswerkzeuges erhöht, doch werden sich dadurch vermehrt Ablagerungen beziehungsweise verbrannte beziehungsweise karbonisierte Partikel bilden. Diese Partikel sind im gespritzten Kunststoffteil sichtbar und führen zu ästhetischen und mechanischen Mängel, die nicht tolerierbar sind. Der spritzgusstechnisch versierte Fachmann weiss nun, dass das Spritzgusswerkzeug gereinigt werden muss. Dies kann er nun ohne das Spritzgusswerkzeug zum Formenbauer zurückzusenden, selbst vornehmen. Hierzu wird er die verschiedenen Verteilplatten des erfindungsgemässen Spritzgusswerkzeuges trennen, um die verschiedenen, auswechselbaren Einsätze mittels den Ausstossschrauben herauszunehmen und nun die entsprechenden Heisskanalzuleitungen 5 zu reinigen.

Hierzu braucht er keine Zapfen auszubohren und neue wieder einzusetzen. Auch die auswechselbaren Einsätze kann er selbstverständlich selbst reinigen. Um jedoch die Stillstandzeit des Werkzeuges zu reduzieren, kann der Werkzeugbauer durchaus auch einen vollständigen Satz an auswechselbaren Einsätzen für das entsprechende Spritzgusswerkzeug mitliefern, so dass der Spritzgussbetrieb lediglich die Leitungen durchputzen und dann den Satz der mitgelieferten, auswechselbaren Einsätzen austauschen. Danach wird er das Spritzgusswerkzeug wieder zusammenbauen.

Ein Formenbauer, der Spritzgusswerkzeuge der erfindungsgemässen Art herstellt, wird die auswechselbaren Einsätze standardisieren. Prinzipiell sind je nach Werkzeuggrösse beispielsweise Heisskanalleitungen mit lediglich drei bis vier verschiedenen Durchmesser erforderlich. Es ist somit durchaus denkbar, dass ein Betrieb für die üblichen Grössen von Spritzgusswerkzeugen die auswechselbaren Einsätze beispielsweise aus gesintertem Material in grösseren Serien herstellt oder auch gusstechnisch solche metallenen auswechselbare Einsätze herstellen lässt. Für speziellere Spritzgusswerkzeuge wird man aber immer auch solche Einsätze selbstgefertigt, spanabhebend anfertigen.

Damit man die geraden aber geneigt in der jeweiligen Platte verlaufenden Heisskanalzuleitungen problemlos reinigen kann, müssen die Bohrungen vollständig von der einen Oberfläche zur anderen Oberfläche durchgeführt werden. Die Vertiefungen in denen diese Bohrungen münden, brauchen aber nicht zwingend so gross zu sein, dass die Austrittsfläche dieser durchgehenden Bohrung vollständig im Bereich der Vertiefung münden. Dies ist beispielsweise in der Figur 2 durchaus erkennbar. So erkennt man in dieser Figur, dass die Heisskanalzuleitung 5 zwar vollständig innerhalb der Vertiefung 30 mündet, aber diese Vertiefung im Prinzip quert und bei 16 wieder austritt. Der auswechselbare Einsatz 10 schliesst aber diesen Bohrungsaustrittsbereich 16 ab und es ist folglich absolut unwesentlich, ob die Austrittsfläche der Bohrung vollständig innerhalb der Grundfläche der Vertiefung 30 liegt oder sich aus dieser heraus erstreckt. Da die auswechselbaren Einsätze 10 für die Reinigung entnommen werden, stören diese bei der Reinigung der Heisskanalzuleitungen überhaupt nicht.

### Bezugszeichenliste:

- 1: Spritzgusswerkzeug (hot-runner)
- 2: zentrale Zuleitung vom Extruder oder Spritzgussaggregat
- 3: obere Verteilplatte
- 4: untere Verteilplatte
- 5: Heisskanalzuleitung
- 6: Verteilerdüse
- 7: obere Fläche
- 8: untere Fläche
- 9: Kavitäten
- 10: auswechselbarer Einsatz
- 11: Verteileinsatz
- 12: Umlenkeinsatz
- 13: Mündungs- bzw. Austrittsflächen
- 14: Bohrung
- 15: Befestigungs- und Demontageschrauben
- 16: Bohrungsaustrittsbereich der Heisskanalzuleitung

- 20: Ausgussbuchse
- 21: Fixierplatte
- 30: Vertiefung

## Patentansprüche

1. Spritzgusswerkzeug (1) mit mindestens einer zentralen Zuleitung (2) bestehend aus zwei oder mehreren übereinander angeordneten Verteilplatten (3, 4), wobei eine obere Verteilplatte (3) auf einer unteren Verteilplatte (4) aufliegt und mindestens eine Heisskanalzuleitung (5) mit einem Verzweigungspunkt oder mehreren Verzweigungspunkten, in denen eine Richtungsänderung und / oder eine Teilung der Heisskanalzuleitung (5) erfolgt, vorhanden ist,
**dadurch gekennzeichnet, dass** zur Zuführung der heissen Spritzgussmasse zu zwei oder mehreren Kavitäten (6), in jeder Verteilplatte (3, 4) der Spritzgussform (1) die Heisskanalzuleitungen (5) geradlinig von der oberen Fläche (7) einer Verteilplatte (3, 4) zur unteren Fläche (8) dieser Verteilplatte gerade und geneigt zu deren oberen und unteren Fläche (7, 8) verlaufen und in auswechselbare Einsätze (10), in denen die Teilung oder die Richtungsänderung einer Heisskanalzuleitung (5) erfolgt, münden.

2. Spritzgusswerkzeug (1) nach Anspruch 1, **dadurch gekennzeichnet, dass** die mindestens eine zentrale Zufuhrleitung (2) in einer Ausgussbuchse (20) vertikal verläuft und in einem ersten, auswechselbaren Einsatz (10) mündet, der in der oberen Fläche (7) der darunter befindlichen oberen Verteilplatte (7) eingelassen ist und wobei dieser auswechselbare Einsatz (10) als ein Verteileinsatz (11) gebildet ist.

3. Spritzgusswerkzeug (1) nach Anspruch 2, **dadurch gekennzeichnet, dass** vom ersten auswechselbaren Einsatz (10), der in der oberen Fläche (7) der oberen Verteilplatte (3) eingelassen ist, mindestens zwei Heisskanalzuleitungen (5) durch diese Verteilplatte (3) gerade und geneigt verlaufen, und an der unteren Fläche(8) dieser oberen Verteilplatte 3) in dort eingelassene, auswechselbare Einsätze (10) münden, wobei diese Einsätze Verteil- oder Umlenkeinsätze (11, 12) sind.

4. Spritzgusswerkzeug (1) nach Anspruch 1, **dadurch gekennzeichnet, dass** die Verteileinsätze (11) jeweils in der oberen Fläche (7) einer Verteilplatte eingelassen sind und die Umlenkeinsätze (12) jeweils in der unteren Fläche (8) einer Verteilplatte (3, 4) eingelassen sind.

5. Spritzgusswerkzeug (1) nach Anspruch 1, **dadurch gekennzeichnet, dass** die auswechselbaren Einsätze (10) kraft- und/oder formschlüssig in der Platte (3, 4) gehalten sind.

6. Spritzgusswerkzeug (1) nach Anspruch 1, **dadurch gekennzeichnet, dass** die auswechselbaren Einsätze (10) senkrecht zu den unteren bzw. oberen Flächen (7, 8) der Verteilplatte 3, 4) verlaufende Seitenflächen aufweisen.

7. Spritzgusswerkzeug (1) nach Anspruch 1, **dadurch gekennzeichnet, dass** die auswechselbaren Einsätze (10) mindestens an jenen Seitenwänden die als Mündungs- oder Austrittsflächen (13) dienen mit den geneigt verlaufenden Heisskanalzuleitungen (5) in Kontakt stehen so geneigt sind, dass sie senkrecht zur Verlaufsrichtung jener Heisskanalzuleitung (5) verlaufen.

8. Spritzgusswerkzeug (1) nach Anspruch 1, **dadurch gekennzeichnet, dass** in den Platten (3, 4) senkrecht verlaufende Ausstossbohrungen (14) angebracht sind, die in Vertiefungen (30) münden, in denen die auswechselbaren Einsätze (10) lagern.

9. Spritzgusswerkzeug (1) nach Anspruch 8, **dadurch gekennzeichnet, dass** die Ausstossbohrungen (14) mit einem Innengewinde versehen sind, in dem eine Ausstossschraube (15) einsetzbar ist, mittels der der auswechselbare Einsatz (10) mit Kraft auf der Verteilplatte (3, 4) gehalten oder zur Reinigung aus der Verteilplatte (3, 4) in der der auswechselbare Einsatz (10) lagert, ausstossbar ist.

10. Spritzgusswerkzeug (1) nach Anspruch 1, **dadurch gekennzeichnet, dass** die auswechselbaren Einsätze (10) aus Metall spanabhebend gefertigt sind.

11. Spritzgusswerkzeug (1) nach Anspruch 1, **dadurch gekennzeichnet, dass** die auswechselbaren Einsätze (10) aus Metall gesintert oder gegossen sind.

12. Spritzgusswerkzeug (1) nach Anspruch 1, **dadurch gekennzeichnet, dass** die auswechselbaren Einsätze (10) aus Keramik sind.

13. Spritzgusswerkzeug (1) nach Anspruch 6, **dadurch gekennzeichnet, dass** die auswechselbaren Einsätze (10) symmetrisch zur Längsachse oder Ausstossbohrung gestaltet und gelagert sind und die Ausstossschraube (14) somit auf das Zentrum des Einsatzes gerichtet ist.

## Claims

1. An injection moulding tool (1) with at least one central feed conduit (2), consisting of two or more distributor plates (3, 4) which are arranged over one another, wherein an upper distributor plate (3) lies on a lower distributor plate (4), and at least one hot runner feed conduit (5) with a branching point or several branching points, in which a direction change and/or a division of the hot runner feed conduit (5) is effected is present, **characterised in that** for feeding the hot injection moulding mass to two or more cavities (6), the hot runner feed conduits (5) in each distributor plate (3, 4) of the injection mould (1) run in a straight line from the upper surface (7) of a distributor plate (3, 4) to the lower surface (8) of this distributor plate and inclined to its upper and lower surface (7, 8) and run out into exchangeable inserts (1), in which inserts the division or the direction change of a hot runner feed conduit (5) is effected.

2. An injection moulding tool (1) according to claim 1, **characterised in that** the at least one central feed conduit (2) runs vertically in a sprue bush (20) and runs out in a first, exchangeable insert (10) which is recessed in a flush manner in the upper surface (7) of the upper distributor plate (3) which is located therebelow, and wherein this exchangeable insert (10) is formed as a manifold insert (11).

3. An injection moulding tool (1) according to claim 2, **characterised in that** at least two hot runner feed conduits (5) run from the first exchangeable insert (10) which is recessed in a flush manner in the upper surface (7) of the upper distributor plate (3), in a straight and inclined manner through this distributor plate (3) and run out into exchangeable inserts (10) at the lower surface (8) of this upper distributor plate (3) which are recessed there in a flush manner, wherein these inserts are manifold inserts or deflection inserts (11, 12).

4. An injection moulding tool (1) according to claim 1, **characterised in that** the manifold inserts (11) are recessed in a flush manner in each case in the upper surface (7) of a distributor plate, and the deflection inserts (12) are in each case recessed in a flush manner in the lower surface (8) of a distributor plate (3, 4).

5. An injection moulding tool (1) according to claim 1, **characterised in that** the exchangeable inserts (10) are non-positively and/or positively held in the plate (3, 4).

6. An injection moulding tool (1) according to claim 1, **characterised in that** the exchangeable inserts (10) comprise side surfaces running perpendicularly to the lower or upper surfaces (7, 8) of the distributor plate (3, 4).

7. An injection moulding tool (1) according to claim 1, **characterised in that** the exchangeable inserts (10) at least at those side walls which serve as run-out surfaces or exit surfaces (13) and which are in contact with the hot runner feed conduits (5) running in an inclined manner, are inclined such that they run perpendicularly to the running direction of that hot runner feed conduit (5).

8. An injection moulding tool (1) according to claim 1, **characterised in that** perpendicularly running ejection bores (14) which run out in recesses (30), in which the exchangeable inserts (10) are mounted, are incorporated in the plates (3, 4).

9. An injection moulding tool (1) according to claim 8, **characterised in that** the ejection bores (14) are provided with an inner thread, in which an ejection screw (15) can be inserted, by way of which screw the exchangeable insert (1) is held on the distributor plate (3, 4) by force, or for cleaning, can be ejected out of the distributor plate (3, 4), in which the exchangeable insert (10) is mounted.

10. An injection moulding tool (1) according to claim 1, **characterised in that** the exchangeable inserts (10) are manufactured of metal in a machining manner.

11. An injection moulding tool (1) according to claim 1, **characterised in that** the exchangeable inserts (10) are sintered or cast from metal.

12. An injection moulding tool (1) according to claim 1, **characterised in that** the exchangeable inserts (1) are of ceramic.

13. An injection moulding tool (1) according to claim 6, **characterised in that** the exchangeable inserts are designed and mounted symmetrically to the longitudinal axis or ejection bore, and the ejection screw (14) is thus directed to the centre of the insert.

## Revendications

1. Outil (1) de moulage par injection avec au moins un conduit d'alimentation (2) central, constitué de deux ou de plusieurs plaques distributrices (3, 4) superposées, une plaque distributrice (3) supérieure reposant sur une plaque distributrice (4) inférieure et au moins un conduit d'alimentation (5) de canal chaud avec un point de dérivation ou plusieurs points de dérivation, dans lesquels s'effectue un changement de direction et / ou une division du conduit d'alimentation (5) de canal chaud étant présent,
**caractérisé en ce que** pour alimenter la masse chaude de moulage par injection vers deux ou plusieurs cavités (6), dans chaque plaque distributrice (3, 4) du moule de moulage par injection (1), les conduits d'alimentation (5) de canaux chauds s'étendant de manière rectiligne et en inclinaison vers ses surfaces (7, 8) supérieure et inférieure, de la face (7) supérieure d'une plaque distributrice (3, 4) vers la face inférieure (8) de ladite plaque distributrice et débouchant dans des inserts (10) interchangeables, dans lesquels s'effectue la division ou le changement de direction d'un conduit d'alimentation (5) de canal chaud.

2. Outil (1) de moulage par injection selon la revendication 1, **caractérisé en ce que** l'au moins un conduit d'alimentation (2) central s'étend à la verticale dans un bec de coulée (20) et débouche dans un premier insert (10) interchangeable qui est incorporé dans la face supérieure (7) de la plaque distributrice (3) supérieure sous-jacente et ledit insert (10) interchangeable étant conçu en tant qu'un insert distributeur (11).

3. Outil (1) de moulage par injection selon la revendication 2, **caractérisé en ce qu'**à partir du premier insert (10) interchangeable qui est incorporé dans la face supérieure (7) de la plaque distributrice (3) supérieure, au moins deux conduits d'alimentation (5) de canaux chauds s'étendent de manière rectiligne et en inclinaison à travers ladite plaque distributrice (3) et sur la face inférieure (8) de ladite plaque distributrice (3) supérieure, débouchent dans des inserts (10) interchangeables qui y sont incorporés, lesdits inserts étant des inserts distributeurs ou de renvoi (11, 12).

4. Outil (1) de moulage par injection selon la revendication 1, **caractérisé en ce que** les inserts distributeurs (11) sont incorporés chacun dans la face supérieure (7) d'une plaque distributrice et les inserts de renvoi (12) sont incorporés chacun dans la face inférieure (8) d'une plaque distributrice (3, 4).

5. Outil (1) de moulage par injection selon la revendication 1, **caractérisé en ce que** les inserts (10) interchangeables sont maintenus dans la plaque (3, 4) par complémentarité de force et/ou de forme.

6. Outil (1) de moulage par injection selon la revendication 1, **caractérisé en ce que** les inserts (10) interchangeables comportent des faces latérales s'étendant à la perpendiculaire des faces (7, 8) supérieure et inférieure de la plaque distributrice (3, 4).

7. Outil (1) de moulage par injection selon la revendication 1, **caractérisé en ce qu'**au moins sur les parois latérales qui font office de faces (13) d'embouchure ou de sortie, avec lesquelles des conduits d'alimentation (5) de canaux chauds sont en contact, les inserts (10) interchangeables sont inclinés de sorte à s'étendre à la perpendiculaire de la direction d'extension de chaque conduit d'alimentation (5) de canal chaud.

8. Outil (1) de moulage par injection selon la revendication 1, **caractérisé en ce que** dans les plaques (3, 4) sont ménagés des perçages d'expulsion (14) s'étendant à la perpendiculaire qui débouchent dans des creux (30) dans lesquels sont logés les inserts (10) interchangeables.

9. Outil (1) de moulage par injection selon la revendication 8, **caractérisé en ce que** les perçages d'expulsion (14) sont munis d'un taraudage dans lequel est insérable une vis d'expulsion (15), à l'aide de laquelle l'insert (10) interchangeable est maintenu avec force sur la plaque distributrice (3, 4) ou pour le nettoyage, peut être expulsé de la plaque distributrice (3, 4) dans laquelle est logé l'insert (10) interchangeable.

10. Outil (1) de moulage par injection selon la revendication 1, **caractérisé en ce que** les inserts (10) interchangeables sont fabriqués en métal, par enlèvement de copeaux.

11. Outil (1) de moulage par injection selon la revendication 1, **caractérisé en ce que** les inserts (10) interchangeables sont frittés ou coulés en métal.

12. Outil (1) de moulage par injection selon la revendication 1, **caractérisé en ce que** les inserts (10) interchangeables sont en céramique.

13. Outil (1) de moulage par injection selon la revendication 6, **caractérisé en ce que** les inserts (10) interchangeables sont conçus et logés de manière symétrique à l'axe longitudinal ou au perçage d'expulsion et la vis d'expulsion (14) est ainsi orientée vers le centre de l'insert.
